# NEUE EUROPÄISCHE PATENTSCHRIFT

(11) **EP 2 740 679 B2**
(45) Veröffentlichungstag und Bekanntmachung des Hinweises auf die Entscheidung über den Einspruch: **04.12.2019**
(45) Hinweis auf die Patenterteilung: 15.02.2017
(21) Anmeldenummer: 12008109.6
(22) Anmeldetag: 04.12.2012
(51) Int. Cl.: B65B 61/06, B65B 9/04, B65B 57/04, B65B 59/00, B65B 61/02, B65B 47/00

(54) **Tiefziehverpackungsmaschine mit taktgenauer Positionierung einer Siegelstation und entsprechendes Verfahren**
Deep draw packaging machine with clock cycled positioning of a sealing station and corresponding method
Machine d'emballage par emboutissage avec positionnement cyclique précis d'un poste de scellage et méthod correspondante

(43) Veröffentlichungstag der Anmeldung: 11.06.2014
(73) Patentinhaber: MULTIVAC Sepp Haggenmüller SE & Co. KG, 87787 Wolfertschwenden (DE)
(72) Erfinder: Ehrmann, Elmar, 87730 Bad Grönenbach (DE); Lau, Christian, 88178 Heimenkirch (DE)
(74) Vertreter: Grünecker Patent- und Rechtsanwälte PartG mbB

(56) Entgegenhaltungen:
- EP-A1- 0 569 933
- DE-A1- 2 437 127
- DE-A1- 10 065 389
- DE-A1-102004 025 387
- DE-B1- 1 815 983
- DE-C1- 4 017 923
- DE-T2- 69 002 930
- JP-A- 2001 277 191

## Beschreibung

Die Erfindung bezieht sich auf eine Tiefziehverpackungsmaschine gemäß den Merkmalen des Anspruchs 1.

Aus der EP 0 569 933 A1 sind Tiefziehverpackungsmaschinen mit in Produktionsrichtung verstellbaren Arbeitsstationen, beispielsweise eine Form-, Siegel-, und Schneidstation, bekannt, die in Abhängigkeit der Position einer Druckmarke auf einer Unterfolie verstellt werden können, wobei die Druckmarke mittels eines Druckmarkensensors vor der Formstation erfasst wird. Die Arbeitsstationen weisen motorische Verstellantriebe mit Wegmesseinrichtungen auf. Sich veränderbare Abstände zwischen aufeinanderfolgenden Druckmarken werden mittels des Druckmarkensensors von der Steuerung ermittelt und die Position der Form-, Siegel- und Schneidstation entsprechend geregelt, um die Abstände der Arbeitsstationen untereinander anzupassen. Damit soll erreicht werden, dass die Formstation Mulden passend zur Position der Druckmarke formt, die Siegelstation Siegelnähte entsprechend der Lage der Mulden erzeugt und die Schneidstation die gesiegelten Packungen passend zu den Siegelnähten schneidet und die Packungen vereinzelt.

Eine Verstellung der Siegelstation nach Erfassen einer Druckmarke wirkt sich erst viele Vorschübe oder Vorzüge der erfassten Druckmarke später aus, da zwischen der Formstation und der Siegelstation eine Einlegestrecke zum Einlegen von zu verpackenden Produkten in die geformten Mulden vorgesehen ist. Dabei bleiben negative Einflüsse durch unregelmäßige Folienschrumpfung oder Toleranzen bei Vorschubbewegungen der Vorschubketten unberücksichtigt. Die Folge ist eine großzügige Auslegung der Breite der Packungsstege und -ränder in Vorschubrichtung, damit die Siegelnaht auf den Rändern mit einer ausreichenden Breite erzeugt werden kann und nach dem anschließenden Schneidvorgang die Siegelnaht noch eine Breite aufweist, um eine gewünschte Siegelqualität zu erreichen. Diese großzügige Auslegung führt zu einem erhöhten Folienverbrauch durch eine große Menge von Folienabfall.

Aus der DE 24 37 127 A1 ist eine weitere Verpackungsmaschine bekannt, bei der ein Druckmarkensensor für die Oberfolie verwendet wird. Dieser Druckmarkensensor ist genau so weit vor der Siegelstation angeordnet, wie auch die Formstation vor der Siegelstation angeordnet ist, sodass der Druckmarkensensor stets genau die Druckmarke erfasst, die dem Folienabschnitt entspricht, der zu der gerade im selben Maschinenzyklus geformten unteren Form gehört.

Aus der DE 100 65 389 A1 ist eine Tiefziehverpackungsmaschine mit einer Oberfoliendruckmarkensteuerung bekannt und aus der DE 1 815 983 eine Verpackungsmaschine, bei der ein Folienabschnitt passend zum Druckbild aus einer Folienbahn abgetrennt wird, um diesen Folienabschnitt dann mittel Transportzangen weiteren Arbeitsstationen zuzuführen. Die nicht vorveröffentliche DE 10 2011 108 939 beschreibt ferner eine Verpackungsmaschine, bei der die Lage von Siegelnähten erfasst wird, um anschließend eine Schneideinrichtung passend zu der Lage der Siegelnähte ausrichten zu können.

Aufgabe der vorliegenden Erfindung ist es, eine Tiefziehverpackungsmaschine in Bezug auf den Folienverbrauch zu verbessern.

Diese Aufgabe wird gelöst durch eine Tiefziehverpackungsmaschine mit den Merkmalen des Anspruchs 1. Vorteilhafte Weiterbildungen der Erfindung sind in den Unteransprüchen angegeben.

Die erfindungsgemäße Tiefziehverpackungsmaschine arbeitet im Betrieb mit einer bestimmten Vorschublänge pro Arbeitstakt. Sie umfasst eine Formstation zum Formen von Mulden in eine Unterfolie, eine Siegelstation, vorzugsweise eine Schneidstation und eine Steuerung, wobei die Siegelstation eine Verstelleinrichtung entlang einer Produktionsrichtung und eine Wegmesseinrichtung aufweist. Erfindungsgemäß ist innerhalb einer Vorschublänge vor der Siegelstation, d. h. innerhalb maximal einer Vorschublänge vor der Siegelstation, ein Messsystem zum Ermitteln der Lage derjenigen Mulden, die in einem nächsten Arbeitstakt in der Produktionsrichtung der Siegelstation zugeführt werden, vorgesehen und die Steuerung ist dazu konfiguriert, die Siegelstation entsprechend der ermittelten Lage der Mulden taktgenau in ihrer Position zu den Mulden mittels der Verstelleinrichtung zu regeln. Dies bringt den Vorteil mit sich, dass die Siegelstation immer exakt in Bezug auf die Lage der zu siegelnden Mulden positioniert werden kann. Somit sind keine Toleranzen bezüglich Vorschubunterschieden mehr zu berücksichtigen und die für die Siegelung notwendige Fläche des Packungsrands kann auf ein Minimum reduziert werden. In Folge kann die Länge eines Folienvorschubs reduziert werden oder es können die Packungsabmessungen in Vorschubrichtung vergrößert werden, was zu einer Reduzierung des Folienabfalls führt.

Bevorzugt ist das Messsystem zum berührungslosen Ermitteln der Lage der Mulden vorgesehen.

Vorzugsweise weist die Formstation eine Vorrichtung auf, um ein Referenzelement in die Unterfolie einzubringen, wobei mittels einer Erfassung des Referenzelements über das Messsystem die Lage der Mulden erfassbar ist. Dies ermöglicht den Einsatz von kostengünstigen Messsystemen, da lediglich das Referenzelement erfasst werden muss, da die Mulden eine vorgegebene Lage zu dem Referenzelement aufweisen. Das Referenzelement kann beispielsweise eine durch die Vorrichtung, die Teil der Formstation ist, erzeugte Ausstanzung in Form eines Loches oder ein Prägen eines Noppens sein. Denkbar sind auch mehrere schmale Ausstanzungen, die z. B. beidseitig der Mulden nahe einer jeweils an beiden Seiten vorgesehenen Klammerkette zum Folientransport angebracht sind. Hierfür sind vor der Siegelstation zwei Messsysteme vorgesehen, um die Referenzelemente von beiden Seiten zu erfassen.

Das Messsystem weist bevorzugt eine Kamera oder einen Reflextaster, beispielsweise eine Lichtschranke auf. Der Reflextaster ist vor allem geeignet, um ein Referenzelement in Form einer Ausstanzung erfassen zu können. Eine Kamera ermöglicht eine Erfassung der Mulden selbst direkt von oben oder unten ohne das Vorhandensein eines Referenzelementes.

Erfindungsgemäß ist die Wegmesseinrichtung der Siegelstation ein magnetostriktiver Lineargeber, um eine hygienegerechte Ausführung bereitzustellen. Ein solcher Lineargeber arbeitet berührungslos mit einem Messaufnehmer derart zusammen, dass selbst der Spalt zwischen Lineargeber und Messaufnehmer leicht reinigbar und beständig gegenüber üblichen Reinigungsmitteln ist.

Bevorzugt ist ein Verstellweg der Siegelstation bis 1000 mm, vorzugsweise größer als 300 mm vorgesehen, um nicht nur Schwankungen in und entgegen der Produktionsrichtung auszugleichen, sondern beispielsweise die Siegelstation auch in eine Werkzeugwechselposition verfahren zu können, in der ein Siegelwerkzeugunter und/oder -oberteil seitlich oder nach oben aus der Tiefziehverpackungsmaschine zu Wartungs-, Reinigungs- oder Wechselzwecken entnehmbar ist.

In einer vorteilhaften Ausführung ist ein weiteres Messsystem zum berührungslosen Ermitteln der Lage der Mulden, die in einem nächsten Arbeitstakt der Schneidstation zugeführt werden, vorgesehen und die Steuerung ist dazu konfiguriert, die Schneidstation entsprechend der ermittelten Lage der Mulden taktgenau in ihrer Position zu den Mulden mittels einer weiteren Verstelleinrichtung zu regeln. Dies stellt sicher, dass auch die Schneidstation taktgenau in Bezug auf die Lage der Mulden oder der in der Siegelstation erzeugten Siegelnähte positioniert werden kann. Denkbar ist bei einer direkt nach der Siegelstation angeordneten Schneidstation, dass die Steuerung die Schneidstation anhand der Erfassung der Mulden bzw. des oder der Referenzelemente positioniert.

In einer weiteren besonderen Ausführungsform ist mittels der Steuerung eine Tendenzregelung für die Formstation vorgesehen. Der Begriff Tendenzregelung bedeutet, dass eine wiederholt nacheinander in nur eine Richtung ausgeführte Positionierung der Siegelstation von der Steuerung erkannt wird und dazu entgegensteuernd die Steuerung die Formstation so in der Gegenrichtung verstellt, dass eine weitere in eine Richtung fortlaufende Positionierung der Siegelstation vermieden werden kann.

Vorzugsweise ist die Formstation und/oder die Siegelstation in eine Werkzeugwechselposition in oder gegen der Produktionsrichtung verfahrbar, um diese in eine bezogen auf die Tiefziehverpackungsmaschine seitlich zugängliche Position zu verstellen, um einen Werkzeugwechsel ergonomisch und ohne Einfluss auf eine Folie vornehmen zu können.

Ein Verfahren zum Betrieb einer Tiefziehverpackungsmaschine, die eine Formstation zum Formen von Mulden in eine Unterfolie, eine Siegelstation und eine Steuerung umfasst, sieht vor, dass in einem bestimmten Arbeitstakt mittels eines Messsystems die Lage der Mulden, die in einem direkt folgenden Arbeitstakt der Siegelstation zugeführt werden, ermittelt wird und die Steuerung mittels einer Verstelleinrichtung die Siegelstation bis zum nächsten Arbeitstakt oder spätestens innerhalb des nächsten Arbeitstakts taktgenau in ihrer Position zu den Mulden positioniert. Somit kann die Siegelstation immer exakt in Bezug auf die Lage der zu siegelnden Mulden positioniert werden und Toleranzen unberücksichtigt gelassen werden, welches zu einer Reduzierung des Folienverbrauchs führt.

Das Messsystem erfasst vorzugsweise ein Referenzelement, das in die Unterfolie mittels einer Vorrichtung der Formstation eingebracht worden ist, um die Lage der Mulden an die Steuerung zu übermitteln.

Die Steuerung ermittelt aus einer sich verändernden Lage der Mulden bevorzugt eine Tendenz und passt die Position der Formstation mittels einer weiteren Verstelleinrichtung in Bezug auf eine Produktionsrichtung an. Als Variante kann auch ein Parameter für die Länge der intermittierenden Vorschübe in der Steuerung angepasst werden.

Als eine weitere Variante zur berührungslosen Ermittlung der Lage der Mulden ist eine mechanische Abtasteinrichtung denkbar, um eine Ausstanzung oder einen Noppen als Referenzelement abzutasten.

Denkbar ist auch die Möglichkeit, dass der Bediener Sollpositionen als Vorgabe für verschiedene Formwerkzeuge und damit auch mögliche unterschiedliche Vorschublängen in Programmen für die Prozesse in der Steuerung abzuspeichern.

Im Folgenden wird ein vorteilhaftes Ausführungsbeispiel der Erfindung anhand einer Zeichnung näher erläutert. Im Einzelnen zeigen:
- Fig. 1: eine erfindungsgemäße Tiefziehverpackungsmaschine in einer schematischen Seitenansicht,
- Fig. 2: eine Teildarstellung einer Siegelstation in einer perspektivischen Ansicht und
- Fig. 3: eine Draufsicht auf die Unterfolie 4 vor, in und nach der Siegelstation.

Gleiche Komponenten sind in den Figuren durchgängig mit gleichen Bezugszeichen versehen.

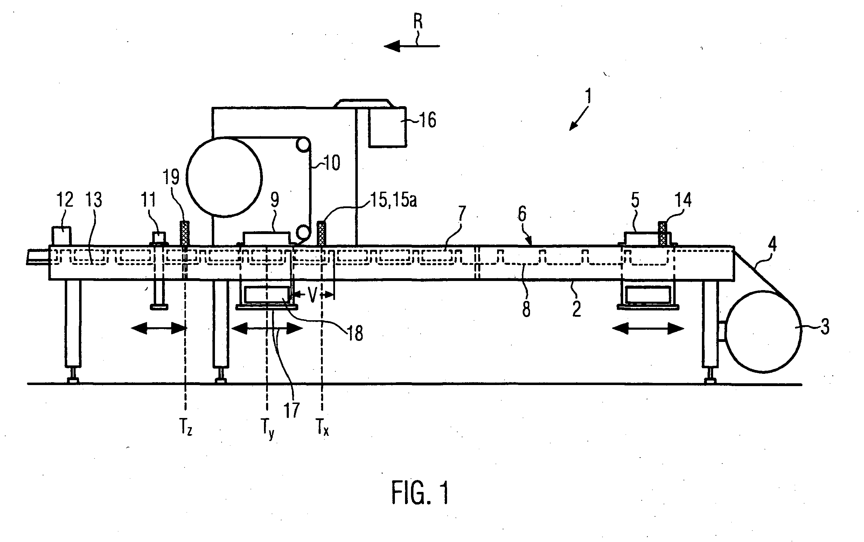

Fig. 1 zeigt eine erfindungsgemäße, taktweise arbeitende Tiefziehverpackungsmaschine 1 mit einem Maschinenrahmen 2, der entlang einer Produktionsrichtung R ausgerichtet ist. Am rechts in der Fig.1 gezeigten Anfang der Tiefziehverpackungsmaschine 1 ist eine Abrollvorrichtung 3 für eine Unterfolie 4 vorgesehen. Die Unterfolie 4 wird mittels zweier nicht näher dargestellter Vorschubketten mit einer Vorschublänge V pro Arbeitstakt in Produktionsrichtung R einer Formstation 5 zugeführt. Desweiteren ist eine Einlegestrecke 6 zum Einlegen eines Produkts 7 in geformte Mulden 8 stromabwärts nach der Formstation 5 gezeigt. Im weiteren Produktionsverlauf folgen eine Siegelstation 9 zum Verschließen der mit Produkt 7 gefüllten Mulden 8 mit einer Deckelfolie 10 und eine erste Schneidstation 11, die als Querschneidung ausgeführt ist. Eine zweite Schneideinrichtung 12, die nach der ersten Schneideinrichtung 11 stromabwärts angeordnet ist, ist als Längsschneidung ausgeführt und vereinzelt die Verpackungen 13.

Es können mehrere in Produktionsrichtung R geformte Mulden 8 in der Unterfolie angeordnet sein, die als Format mit beispielsweise drei nebeneinander angeordneten Mulden 8 um jeweils eine Mulde 8 in einem Takt intermittierend stromabwärts transportiert werden. Es ist aber ebenso denkbar, dass die Formstation 5 mehrere Reihen von Mulden 8 formt und jeweils dieses Format von Mulden 8, die in einem Arbeitstakt in der Formstation 5 in die Unterfolie 4 geformt werden, taktweise in Produktionsrichtung R weiter transportiert wird.

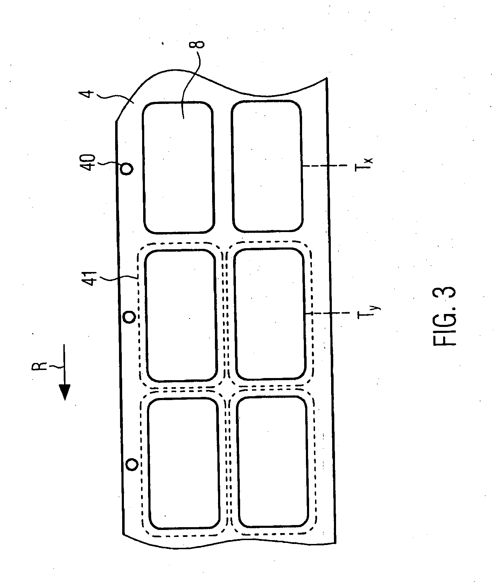

Im Folgenden soll die Arbeitsweise der gezeigten Tiefziehverpackungsmaschine 1 näher erläutert werden. Die von der Abrollvorrichtung 3 abgerollte Unterfolie 4 wird von den Vorschubketten beidseitig erfasst und der Formstation 5 zugeführt. In der Formstation 5 werden eine oder mehrere Mulden 8 in die Unterfolie 4 geformt und in definierter Position relativ zu den Mulden 8 ein Referenzelement 40 (siehe Fig. 3) mittels einer Stanzvorrichtung 14 in die Unterfolie 4 in einem Bereich eingebracht, der außerhalb der Mulden 8 und außerhalb oder zwischen später erzeugten Siegelnähten 41 liegt. Beispielsweise kann es sich bei dem Referenzelement 40 um ein Loch mit einem Durchmesser von 5 mm handeln.

Im nächsten Arbeitstakt wird die Unterfolie 4 mit den geformten Mulden 8 intermittierend entlang der Einlegestrecke 6 weitertransportiert. Dabei werden die Mulden 8 manuell oder automatisch beispielsweise mittels Pickern mit Produkten 7 gefüllt. In einem Takt Tx direkt vor Erreichen der Siegelstation 9, d. h. maximal eine Vorschublänge V vor der Siegelstation 9, ist ein Messsystem 15 oberhalb der Unterfolie 4 angebracht, um das Referenzelement 40 während der taktweisen Vorschubbewegung der Unterfolie 4 erfassen oder im Stillstand die Lage des Referenzelements 40 beispielsweise mittels einer Kamera 15a zu ermitteln.

Die Information über die Lage des Referenzelements 40 im Takt Tx wird einer Steuerung 16 übermittelt. In der Steuerung 16 ist die Lage der Mulde 8 zum Referenzelement 40 hinterlegt, so dass die Steuerung 16 die Siegelstation 9 für den Takt Ty mittels einer Verstelleinrichtung 17 so verstellt, dass die Mulden 8, die im Takt Tx erfasst wurden, im folgenden Takt Ty in der Siegelstation 9 exakt mit dieser bezüglich ihrer Lage korrespondieren. Die Verstelleinrichtung 17 wird betätigt, nachdem der Siegelvorgang zum Ansiegeln der Deckelfolie 10 auf die Unterfolie 4 abgeschlossen wurde und sich ein Siegelwerkzeugunterteil 18 nach unten aus dem Kollisionsbereich der Mulden 8 entfernt hat, um die nächste Vorschubbewegung der Unterfolie 8 zuzulassen.

Somit bezieht sich die Verstellung der Siegelstation 9 immer taktgenau auf die im Takt zuvor erfasste Lage der Mulden, da die Erfassung der Mulden 8 im Takt Tx eine Verstellung der Siegelstation 9 im direkt nachfolgenden Takt Ty zur Folge hat.

Die Steuerung 16 kann zusätzlich zur Verstellung der Siegelstation 9 auch eine Verstellung der ersten Schneidstation 11 ausführen, um die Verpackungen 13 bzw. die Unterfolie 4 und die Deckelfolie 10 direkt an der Siegelnaht 41 quer zur Produktionsrichtung R ausgerichtet teilweise herauszutrennen. Hierzu kann die Erfassung der Mulden 8 im Takt Tx mittels des Messsystems 15 vor der Siegelstation 9 vorgesehen sein, oder ein weiteres Messsystem 19 im Takt Tz vor der Schneidstation 11 ermittelt die Lage der Mulden 8 oder der in der Siegelstation 9 erzeugten Siegelnähte 41 (siehe Figur 3). Die zum Ende der Tiefziehverpackungsmaschine 1 angeordnete zweite Schneideinrichtung 12 ist als Längsschneidung ausgebildet und trennt die Verpackungen 13 längs zur Produktionsrichtung R aus, so dass die Verpackungen 13 vereinzelt dem weiteren Produktionsprozess zugeführt werden können.

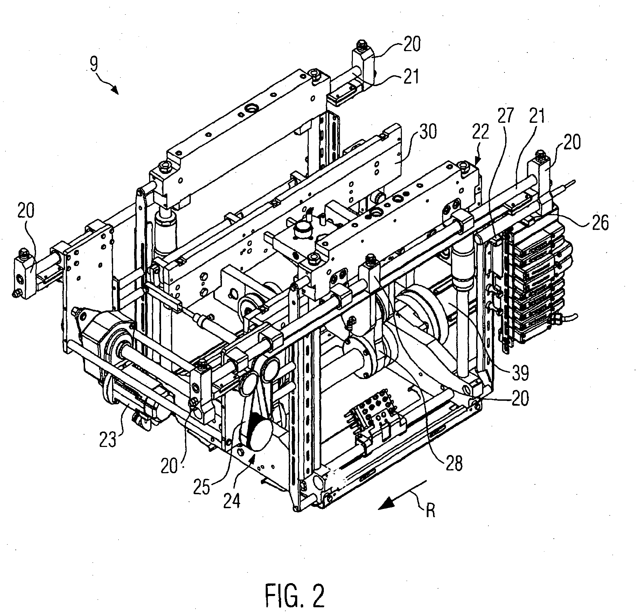

In Figur 2 ist die Siegelstation 9 ohne ein Siegelwerkzeugoberteil und das Siegelwerkzeugunterteil 18 dargestellt. Über sechs Befestigungselemente 20 ist die Siegelstation 9 am Maschinenrahmen 2 angebracht. Entlang von Führungsschienen 21 ist eine Hubeinrichtung 22 in und entgegen der Produktionsrichtung R bewegbar. Über einen Servoantrieb 23 und ein Riemengetriebe 24 ist die Hubeinrichtung 22 relativ zum Maschinenrahmen 2 mittels eines Zahnriemens 25 längs der Produktionsrichtung R verstellbar. Die Position der Siegelstation 9 bzw. der Hubeinrichtung 22 ist gegenüber dem Maschinenrahmen 2 über eine Wegmesseinrichtung 26 erfassbar, wobei die Wegmesseinrichtung 26 ein magnetostriktiver berührungslos arbeitender Lineargeber ist, der entlang des Maschinenrahmens 2 ausgerichtet ist. Ein zugehöriger Messaufnehmer 27 ist an der Hubeinrichtung 22 angebracht. Die Hubeinrichtung 22 weist ein Kniehebelhubwerk 28 mit einem Servoantrieb 29 auf, um das (nicht in Fig. 2 dargestellte) Siegelwerkzeugunterteil 18, das auf den Aufnahmen 30 vorgesehen ist, vertikal anzuheben und abzusenken.

Fig. 3 zeigt in einer Draufsicht auf die Unterfolie 4 jeweils zwei Mulden 8, die zweispurig angeordnet sind, und einen einreihigen Takt beziehungsweise Vorschub. Das Referenzelement 40 befindet sich am in Produktionsrichtung R gesehen rechten Rand der Unterfolie 4 neben bzw. außerhalb der Siegelnaht 41. Der Takt Tx vor der Siegelstation 9 geht mit einem Vorschub in den nächsten Takt Ty in der Siegelstation über.

Anhand der Fig. 1 wird eine Tendenzregelung für die Formstation 5 näher erläutert. Stellt die Steuerung 16 fest, dass mehrmals hintereinander die Siegelstation 9 in die wiederholt gleiche Richtung verstellt wurde, so kann die Formstation 5 mittels einer eigenen Verstelleinrichtung in entgegengesetzter Richtung verstellt werden, um eine fortlaufende Verstellung der Siegelstation 9 in nur einer Richtung zu minimieren oder zu beenden. Die Verstellung der Siegelstation 9 dient in erster Linie dazu, Unregelmäßigkeiten im Vorschub der Unterfolie 4 oder Unregelmäßigkeiten in der Unterfolie 4 selbst auszugleichen, indem auf die Lage der Mulde 8 taktgenau Bezug genommen wird.

## Patentansprüche

1. Tiefziehverpackungsmaschine (1), umfassend eine Formstation (5) zum Formen von Mulden (8) in eine Unterfolie (4), eine Siegelstation (9) und eine Steuerung (16), wobei die Siegelstation (9) eine Verstelleinrichtung (17) für ein Verstellen ihrer Position entlang einer Produktionsrichtung (R) und eine Wegmesseinrichtung (26) aufweist, wobei die Tiefziehverpackungsmaschine (1) dazu eingerichtet ist, taktweise mit einer Vorschublänge (V) pro Arbeitstakt betrieben zu werden, **dadurch gekennzeichnet, dass** innerhalb einer Vorschublänge (V) stromaufwärts der Siegelstation ein Messsystem (15) zum Ermitteln der Lage der Mulden (8), die in einem nächsten Arbeitstakt (Ty) in der Produktionsrichtung (R) der Siegelstation (9) zugeführt werden, vorgesehen ist und dass die Steuerung (16) dazu konfiguriert ist, die Position der Siegelstation (9) entsprechend der ermittelten Lage der Mulden (8) taktgenau in ihrer Position zu den Mulden (8) mittels der Verstelleinrichtung (17) zu regeln,
wobei die Wegmesseinrichtung (26) ein magnetostriktiver Lineargeber ist.

2. Tiefziehverpackungsmaschine nach Anspruch 1, **dadurch gekennzeichnet, dass** das Messsystem (15) zum berührungslosen Ermitteln der Lage der Mulden (8) vorgesehen ist.

3. Tiefziehverpackungsmaschine nach einem der vorangehenden Ansprüche, **dadurch gekennzeichnet, dass** die Formstation (5) eine Vorrichtung (14) aufweist, um in definierter Lage relativ zu den Mulden (8) ein Referenzelement (40) in die Unterfolie (4) einzubringen, wobei mittels einer Erfassung des Referenzelements (40) über das Messsystem (15) die Lage der Mulden (8) erfassbar ist.

4. Tiefziehverpackungsmaschine nach einem der vorangehenden Ansprüche, **dadurch gekennzeichnet, dass** das Messsystem (15) eine Kamera (15a) oder einen Reflextaster aufweist.

5. Tiefziehverpackungsmaschine nach einem der vorangehenden Ansprüche, **dadurch gekennzeichnet, dass** ein Verstellweg der Siegelstation (9) bis 1000 mm vorgesehen ist.

6. Tiefziehverpackungsmaschine nach einem der vorangehenden Ansprüche, **dadurch gekennzeichnet, dass** ein weiteres Messsystem (19) zum berührungslosen Ermitteln der Lage der Mulden (8), die in einem nächsten Arbeitstakt (Tz) der Schneidstation (11) zugeführt werden, vorgesehen ist und dass die Steuerung (16) dazu konfiguriert ist, die Schneidstation (11) entsprechend der ermittelten Lage der Mulden (8) taktgenau in ihrer Position zu den Mulden (8) mittels einer weiteren Verstelleinrichtung zu regeln.

7. Tiefziehverpackungsmaschine nach einem der vorangehenden Ansprüche, **dadurch gekennzeichnet, dass** mittels der Steuerung (16) eine Tendenzregelung für die Formstation (5) vorgesehen ist.

8. Tiefziehverpackungsmaschine nach einem der vorangehenden Ansprüche, **dadurch gekennzeichnet, dass** die Formstation (5) und/oder die Siegelstation (9) in eine Werkzeugwechselposition verfahrbar ist.

9. Tiefziehverpackungsmaschine nach einem der vorangehenden Ansprüche, **dadurch gekennzeichnet, dass** die Steuerung (16) dazu konfiguriert ist, Sollpositionen der Formstation (5) und/oder der Siegelstation (9) in Rezepten in der Steuerung (16) einzugeben und abzuspeichern.

## Claims

1. Thermo-forming packaging machine (1) comprising a forming station (5) for forming trays (8) into a base film (4), a sealing station (9) and a control unit (16), where said sealing station (9) comprises an adjustment device (17) for adjusting the position of the sealing station along a direction of production (R), and a displacement measuring device (26), where said thermo-forming packaging machine (1) is adapted to be operated intermittently with a feed length (V) for every work cycle, **characterized in that** a measuring system (15) is provided within one feed length (V) upstream of said sealing station for determining the location of said trays (17) being supplied to said sealing station (9) in the direction of production (R) during a following work cycle (Ty) and that said control unit (16) is configured to control the position of said sealing station (9) according to the determined location of said trays (9) in a true-to-cycle manner in its position relative to said trays (8) using said adjustment device (17),
wherein said displacement measuring device (26) is a magnetostrictive linear transducer.

2. Thermo-forming packaging machine according to claim 1, **characterized in that** said measuring system (15) is provided for contactless determination of the location of said trays (8).

3. Thermo-forming packaging machine according to one of the preceding claims, **characterized in that** said forming station (5) comprises a device (14) for introducing a reference element (40) into said base film (4) at a defined location relative to said trays (8), where the location of said trays (8) is detectable via said measuring system (15) by detecting said reference element (40).

4. Thermo-forming packaging machine according to one of the preceding claims, **characterized in that** said measuring system (15) comprises a camera (15a) or a reflex sensor.

5. Thermo-forming packaging machine according one of the preceding claims, **characterized in that** an adjustment range of said sealing station (9) is provided of up to 1000 mm.

6. Thermo-forming packaging machine according to one of the preceding claims, **characterized in that** a further measuring system (19) is provided for contactless determination of the location of said trays (8) being supplied to said cutting station (11) during a following work cycle (Tz), and that said control unit (16) is configured to control said cutting station (11) according to the determined location of said trays (8) in a true-to-cycle manner in its position relative to said trays (8) using a further adjustment device.

7. Thermo-forming packaging machine according to one of the preceding claims, **characterized in that** trend control for said forming station (5) is set up using said control unit (16).

8. Thermo-forming packaging machine according to one of the preceding claims, **characterized in that** said forming station (5) and/or said sealing station (9) are movable into a tool exchange position.

9. Thermo-forming packaging machine according to one of the preceding claims, **characterized in that** said control unit (16) is configured to enter and store target positions of said forming station (5) and/or said sealing station (9) in formulae in said control unit (16).

## Revendications

1. Machine d'emballage par emboutissage ou thermoformage (1), comprenant un poste de formage (5) destiné à former des cavités (8) dans une feuille inférieure (4), un poste de scellage (9) et une commande (16), le poste de scellage (9) comportant un dispositif de déplacement (17) pour assurer un déplacement de sa position le long d'une direction de production (R), et un dispositif de mesure de déplacement (26), et la machine d'emballage par emboutissage ou thermoformage (1) étant conçue pour un fonctionnement cyclique avec une longueur d'avancement (V) par cycle de travail, **caractérisée en ce qu'**à l'intérieur d'une longueur d'avancement (V), il est prévu en amont du poste de scellage, un système de mesure (15) pour déterminer la position des cavités (8), qui vont être amenées dans la direction de production (R) au poste de scellage (9) lors d'un cycle de travail suivant (Ty), et **en ce que** la commande (16) est configurée pour régler la position du poste de scellage (9) conformément à la position des cavités (8) ayant été déterminée, de manière précise pour le cycle considéré, dans sa position par rapport aux cavités (8), au moyen du dispositif de déplacement (17), le dispositif de mesure de déplacement (26) étant un capteur linéaire magnétostrictif.

2. Machine d'emballage par emboutissage ou thermoformage selon la revendication 1, **caractérisée en ce que** le système de mesure (15) est prévu pour la détermination sans contact de la position des cavités (8) .

3. Machine d'emballage par emboutissage ou thermoformage selon l'une des revendications précédentes, **caractérisée en ce que** le poste de formage (5) comporte un dispositif (14) pour insérer un élément de référence (40) dans la feuille inférieure (4), dans une position définie par rapport aux cavités (8), une détection de l'élément de référence (40) au moyen du système de mesure (15) permettant de relever la position des cavités (8).

4. Machine d'emballage par emboutissage ou thermoformage selon l'une des revendications précédentes, **caractérisée en ce que** le système de mesure (15) comporte une caméra (15a) ou un palpeur à réflexion.

5. Machine d'emballage par emboutissage ou thermoformage selon l'une des revendications précédentes, **caractérisée en ce qu'**il est prévu un déplacement du poste de scellage (9) jusqu'à 1000 mm.

6. Machine d'emballage par emboutissage ou thermoformage selon l'une des revendications précédentes, **caractérisée en ce qu'**il est prévu un autre système de mesure (19) pour la détermination sans contact de la position des cavités (8), qui sont transmises dans un cycle de travail suivant (Tz) au poste de découpage (11), et **en ce que** la commande (16) est configurée pour régler la position du poste de découpage (11) conformément à la position des cavités (8) ayant été déterminée, de manière précise pour le cycle considéré, dans sa position par rapport aux cavités (8), au moyen d'un autre dispositif de déplacement.

7. Machine d'emballage par emboutissage ou thermoformage selon l'une des revendications précédentes, **caractérisée en ce qu'**au moyen de la commande (16) il est prévu une régulation de tendance pour le poste de formage (5).

8. Machine d'emballage par emboutissage ou thermoformage selon l'une des revendications précédentes, **caractérisée en ce que** le poste de formage (5) et/ou le poste de scellage (9) peuvent être déplacés dans une position de changement d'outillage.

9. Machine d'emballage par emboutissage ou thermoformage selon l'une des revendications précédentes, **caractérisée en ce que** la commande (16) est configurée pour la saisie et la mémorisation de positions de consigne du poste de formage (5) et/ou du poste de scellage (9), dans des formules dans la commande (16).
